# EUROPÄISCHE PATENTSCHRIFT

(11) **EP 0 615 210 B1**
(45) Veröffentlichungstag und Bekanntmachung des Hinweises auf die Patenterteilung: **05.01.2000**
(21) Anmeldenummer: 94103205.4
(22) Anmeldetag: 03.03.1994
(51) Int. Cl.: G06K 19/073

(54) **Chipkarte**
IC-card
Carte à puce

(30) Priorität: 06.03.1993 DE 4307122
(43) Veröffentlichungstag der Anmeldung: 14.09.1994
(73) Patentinhaber: ALCATEL, 75008 Paris (FR)
(72) Erfinder: Turban, Karl-Albert, D-71229 Leonberg (DE)
(74) Vertreter: Knecht, Ulrich Karl, Dipl.-Ing.

(56) Entgegenhaltungen:
- EP-A- 0 513 507
- FR-A- 2 661 762
- IEEE COMMUNICATIONS MAGAZINE, Bd.27, Nr.7, Juli 1989, NEW-YORK Seiten 41 - 48, XP000038828 NAOKI MATSUO, KATSUNORI SHIMOHARA, HIROYUKI MATSUI, YUKIO TOKUNAGA 'personal telephone services using ic-cards'
- PATENT ABSTRACTS OF JAPAN vol. 15, no. 26 (E-1025) 22. Januar 1991 & JP-A-02 270 424 (METEOOLA SYST KK) 5. November 1990
- CA CONFERENCE ARTICLE Bd. 121, 1992, BAD NAUHEIM, Seiten 303 - 313 HARTLEIF 'Die multifunktionale Chipkarte an Kommunikationsendgeräten'
- "Chipkarten als Sicherheitswerkzeug", Springer-Verlag Berlin, 1991, ISBN 3-540-54140-3, Seiten 56-65

## Beschreibung

Die Erfindung betrifft eine Chipkarte und deren Verwendungsmöglichkeiten.

Chipkarten sind aus dem Stand der Technik auch unter dem Namen Smart-Card oder Memokarten (Memocard) bekannt. Weitere bekannte Ausführungsformen einer Karte sind Magnetstreifenkarte, Hologrammkarte und Laserkarte. Desweiteren sind aus dem Stand der Technik noch Memorykarten bekannt, die lediglich aus Speicherbausteinen mit nicht flüchtigem Speicher zusammengesetzt sind, aber über keine eingebaute Intelligenz verfügen. ("Chip Cards (Memocards) and Telecommunications"; George J. Lissandrello; Pacific Telecommunications Council; Honolulu, USA, 1986; S. 166-175). Im Unterschied zu diesen drei Kartentypen besitzt die Chipkarte (Smart-Card) eine eingebaute "Intelligenz", mit der Rechenoperationen durchgeführt und Zugriffe auf den Speicher in der Karte kontrolliert werden können. Diese Chipkarten werden eingesetzt als "elektronisches Geld", als "elektronischer Schlüssel" oder als "tragbarer Informationsspeicher". Hierbei können beispielsweise bei Verwendung in der Telekommunikation häufig gewählte Telefonnummern auf der Chipkarte gespeichert werden, welche an öffentlichen Telefonen unter dem Leistungsmerkmol "Kurzwahl" abrufbar sind ("Chipkarten; Karten mit "Gedächtnis""; Eberhard Schröther; Funkschau 7/1988; S. 50 - 52).

Bedingt durch die zunehmend verbesserte Halbleitertechnologie, mit Hilfe derer auf gleicher Fläche durch Verkleinerung von Strukturen immer mehr Funktionen untergebracht werden können, lassen sich beachtliche Speicher und Rechenkapazitäten auf einer Chipkarte implementieren. Solche Chipkarten mit speziellen Kontrollund Sicherheitslogiken dienen als "elektronisches Geld", wobei die Karte in Form einer "vorausbezahlten Karte" oder in Form einer "Buchungskarte" verwendet wird. Zudem lassen sich mit solchen Karten Zugangskontrollsysteme verwirklichen ("Von der Telefonkarte zur Kryptokarte"; Jürgen Hammerschmitt und Gert Krings; telecom report 14 (1991) Heft 3; S. 158 - 161).

Aus dem Artikel "Personal Telephone Services Using lC-Cards" von N. Matsuo et al., IEEE Communications Magazine 27 (1989) July no.7, S.41-48, ist ein prozessorgesteuertes Telefon und eine in diesem verwendbare Chipkarte gemäß dem Oberbegriff des Anspruchs 1 bekannt, auf der benutzerbezogene Daten gespeichert werden. In dem Telefon ist eine Haupt-CPU zur Steuerung und zur Ausführung der Leistungsmerkmale des Telefons vorgesehen. Die Aufgabe der Haupt-CPU kann alternativ auch von dem auf der Chipkarte befindlichen Prozessor übernommen werden, wodurch die Chipkarte die Funktionen des Telefons steuert. Dazu müssen jedoch Karte und Telefon speziell für einander ausgelegt sein. Für die Bearbeitung des Telekommunikationsprotokolles und speziell des Signalisierungsprotokolles für das Telekommunikationsnetz ist in dem Telefon eine weitere CPU, die Kommunikationssteuerungs-CPU, vorgesehen. Diese steuert zusammen mit einer Netzabschlußeinrichtung für die OSI-Schichten 1 und 2 das Zugriffsprotokoll für das Telekommunikationsnetz. Ein Datenaustausch zwischen Chipkarte und Telekommunikationsnetz ist somit nur indirekt unter Verwendung von Funktionen des Telefons, nämlich der Dienste der Kommunikationssteuerungs-CPU, möglich.

Der Erfindung liegt die Aufgabe zugrunde, eine Chipkarte zu entwickeln, die in der Lage ist, zunehmend mehr Funktionen zu übernehmen und durchzuführen. Insbesondere ist es Aufgabe der Erfindung, eine Chipkarte zur Verwendung in einem Telekommunikationsendgerät anzugeben, mit der ein direkter Datenaustausch zwischen Chipkarte und Telekommunikationsnetz möglich ist.

Die Aufgabe wird erfindungsgemäß gelöst durch die Lehre des ersten Patentanspruchs.

Ein Vorteil der Erfindung liegt darin, daß die Funktionalität eines Telekommunikationsendgerätes unabhängig von dem Endgerät selbst ist. Lediglich durch die Verwendung der Chipkarte wird die Funktionalität des Endgerätes bestimmt. Dies wiederum hat den Vorteil, daß jeder Telekommunikationsteilnehmer über die Chipkarte ein Endgerät mit den gewünschten Bedienelementen oder Leistungsmerkmalen an jedem Ort und zu jeder Zeit zur Verfügung hat. Das Endgerät selbst kann in einer einfachen und kostengünstigen Ausführungsform bereitgestellt werden.

Ein weiterer Vorteil der Erfindung besteht darin, daß der Schutz vor unberechtigtem Zugriff auf persönliche Benutzerdaten von Benutzern von Telekommunikationsendgeräten wesentlich erhöht wird. Ebenfalls wird der Schutz vor Mißbrauch eines Telekommunikationsendgerätes erhöht, weil ohne die Chipkarte das Telekommunikationsendgerät als solches keine oder kaum eine Funktionalität mehr anbietet, es ohne Chipkarte also auch nicht mehr von unberechtigten Benutzern benutzt werden kann.

Ein weiterer wesentlicher Vorteil der Erfindung liegt darin, daß benutzerbezogene Daten direkt in der Chipkarte gespeichert sind. Wegen der direkten Speicherung der benutzerbezogenen Daten müssen diese Daten nicht über größere Entfernungen übertragen werden, z.B. von einer Hauptdatenbank zu dem Telekommunikationsendgerät, was die Signalisierungslast erheblich reduziert.

Vorteilhafte Weiterentwicklungen der Erfindung sind den Unteransprüchen 2 bis 7 zu entnehmen.

Nach Unteranspruch 2 kann die in Anspruch 1 beanspruchte Chipkarte zusammen mit mindestens einer weiteren Chipkarte im gleichen Telekommunikationsendgerät verwendet werden.

Dabei können dies sowohl Chipkarten vom selben Typ als auch Chipkarten eines anderen Typs sein. Zur Ermöglichung der gleichzeitigen Verwendung mehrerer Chipkarten müssen auf jeder Chipkarte Mittel vorhanden sein, die prüfen, ob eine weitere Karte in dem Telekommunikationsendgerät eingesteckt ist.

In Unteranspruch 3 wird die erfindungsgemäße Chipkarte ebenfalls in Telekommunikationsendgeräten verwendet. Die Chipkarte wird verwendet um GSM-Protokolle oder ISDN-Protokolle zu bearbeiten. Desweiteren besteht die Möglichkeit mittels der Chipkarte sowohl GSM-Protokolle als auch ISDN-Protokolle zu bearbeiten. Die Bearbeitung der Protokolle wird durch die Mittel zur Bearbeitung von Telekommunikationsprotokollen die sich auf der Chipkarte befinden möglich.

In Unteranspruch 4 wird eine weitere vorteilhafte Verwendung der beanspruchten Chipkarte beschrieben. Die Chipkarte kann verwendet werden, um Telekommunikationsdienste abzuwickeln. Unter Telekommunikationsdiensten werden hier beispielsweise Dienste wie Datenübermittlung, Teletex, Telefax, Bilddienste und Fernsprechen verstanden.

In Unteranspruch 5 wird eine weitere vorteilhafte Verwendung der beanspruchten Chipkarte beschrieben. Auf der Chipkarte können Leistungsmerkmale und/oder Makrobefehle gespeichert werden. Die Leistungsmerkmale und/oder die Makrobefehle werden im Speicher der Chipkarte abgelegt.

Nach Unteranspruch 6 wird die Chipkarte verwendet, um Signalisierungs- und Nutzdaten zwischen der Chipkarte und einem Telekommunikationsnetzwerk asuzutauschen. Mittels der Chipkarte ist ein direkter Datenaustausch zwischen Telekommunikationsnetzwerk und Chipkarte möglich und nicht zuerst zwischen Chipkarte und Telekommunikationsendgerät und danach zwischen Telekommunikationsendgerät und Telekommunikationsnetzwerk.

In Unteranpsurch 7 wird als weitere vorteilhafte Weiterentwicklung die Verwendung der erfindungsgemäßen Chipkarte zum Signalisierungs- und Nutzdatenaustausch zwischen zwei gleichen oder unterschiedlichen Chipkarten in einem gleichen Telekommunikationsendgerät beschrieben. Ebenfalls besteht die Möglichkeit des Datenaustausches zwischen zwei gleichen oder unterschiedlichen Chipkarten in unterschiedlichen Telekommunikationsendgeräten.

Ein Ausführungsbeispiel wird anhand der folgenden Figur erläutert. Folgende Figur zeigt:
- Fig.:: Blockschaltbild eines Ausführungsbeispiels.

Im folgenden wird die erfindungsgemäße Chipkarte erläutert (ohne Zeichnung).

Die erfindungsgemäße Chipkarte besteht unter anderem aus einem Prozessor und einem Speicher. Der Prozessor stellt Rechenleistung zur schnellen Verarbeitung von Daten zur Verfügung.

Desweiteren befinden sich auf der Chipkarte erste Mittel zum Empfang von Signalisierungs- und Nutzdaten. Zweite Mittel dienen zur Bearbeitung von Telekommunikationsprotokollen und dritte Mittel dienen zur Verarbeitung von der Signalisierungs- und Nutzdaten innerhalb der Chipkarte.

Der Speicher dient zur Speicherung der empfangenen Signalisierungs- und Nutzdaten und zur Speicherung der innerhalb der Chipkarte verarbeiteten Signalisierung- und Nutzdaten. Desweiteren können Leistungsmerkmale und/oder Makrobefehle im Speicher gespeichert werden. In einem Makrobefehl ist eine Folge von Mikrobefehlen zusammengefaßt. Durch Abrufen des Makrobefehls wird die Folge von Mikrobefehlen ausgelöst und sie werden ausgeführt.

Das erste Mittel dient zum Empfang von Signalisierungs- und Nutzdaten. Die Signalisierungs- und Nutzdaten werden beispielsweise von einem Telekommunikationsnetzwerk direkt auf die Chipkarte, die in einem Telekommunikationsendgerät eingesteckt ist, übertragen. Desweiteren kann eine Chipkarte Signalisierungs- und Nutzdaten von einer weiteren Chipkarte empfangen, die im selben Telekommunikationsendgerät eingesteckt ist. Der Empfang der Daten ist auch von einer Chipkarte möglich, die nicht im selben Telekommunikationsendgerät eingesteckt ist, sondern in einem anderen. Die Chipkarte von der aus die Daten empfangen werden, kann eine Chipkarte der gleichen Art sein, möglich ist aber auch, daß es eine Chipkarte einer anderen Art ist, beispielsweise eine herkömmliche Chipkarte.

Mit dem zweiten Mittel werden Telekommunikationsprotokolle, z.B. mittels der Chipkarte bearbeitet. So können beispielsweise Protokolle, die eine Identifikation und Authentifikation eines Benutzers mit einem Telekommunikationsnetzwerk vornehmen, von der Chipkarte bearbeitet werden. Mit Hilfe der Chipkarte identifiziert sich so ein Benutzer als authorisierter Benutzer. Desweiteren werden dem Benutzer mittels der Authentifikation die für ihn zur Verfügung stehenden Leistungsmerkmale zuerkannt und zur Verfügung gestellt.

Da die Bearbeitung von Telekommunikationsprotokollen mittels der Chipkarte vorgenommen wird, kann ein Benutzer dies unabhängig von der Art des Telekommunikationsendgeräts überall und jederzeit vornehmen.

Mit den dritten Mitteln können Signalisierungs- und Nutzdaten innerhalb der Karte verarbeitet werden. So können z.B. empfangene Daten, die im Speicher abgelegt sind, ausgelesen werden, danach innerhalb der Chipkarte verarbeitet werden und wieder in dem Speicher abgelegt werden. Die verarbeiteten Daten können aber auch von der Chipkarte ausgelesen werden.

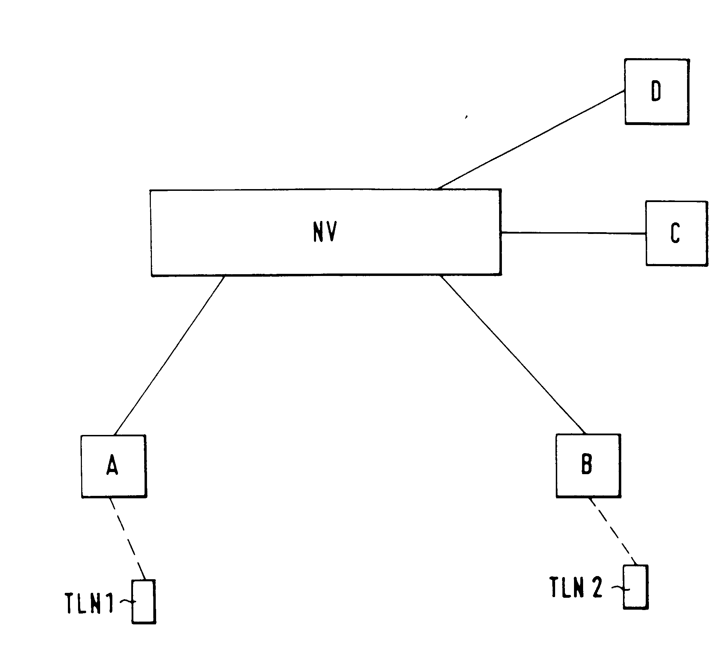

Im folgenden Teil wird die Verwendung der erfindungsgemäßen Chipkarte anhand eines Ausführungsbeispiels mittels der Figur erläutert.

Voraussetzung für das Ausführungsbeispiel ist, daß ein Telekommunikationsteilnehmer mit einem weiteren, ihm bereits bekannten Telekommunikationsteilnehmer eine Verbindung aufzubauen wünscht, und daß bereits mindestens einmal eine Verbindung hergestellt worden ist.

Beispielsweise befinden sich an vier verschiedenen Orten jeweils ein Telekommunikationsendgerät A, B, C, D. Jedes Endgerät ist mit einem Lesegerät für eine oder mehrere gleiche oder unterschiedliche Chipkarten ausgestattet.

Ein erster Teilnehmer TLN1 befindet sich am Ort des Telekommunikationsendgerätes A und hat dort seine persönliche Chipkarte in das Telekommunikationsendgerät eingesteckt.

Ein zweiter Teilnehmer TLN2 befindet sich am Ort des Telekommunikationsendgerätes B und hat dann ebenfalls seine persönliche Chipkarte eingesteckt.

Alle Telekommunikationsendgeräte sind über ein Telekommunikationsnetzwerk mit einer Nachrichtenvermittlungseinrichtung NV verbunden.

Der erste Teilnehmer TLN1 wünscht beispielsweise, den zweiten Teilnehmer TLN2 anzurufen. Dem ersten Teilnehmer TLN1 ist aber der angebliche Ort des Aufenthalts des zweiten Teilnehmers TLN2 nicht bekannt. Es besteht die Möglichkeit, daß sich der zweite Teilnehmer entweder am Ort des Telekommunikationsendgerätes B oder C oder D befindet.

Da der zweite Teilnehmer TLN2 ein häufig anzurufender und bereits häufig angerufener Kunde ist, ist ein Ort mit der häufigsten Aufenthaltswahrscheinlichkeit oder sind mehrere Orte mit gestaffelt häufigen Aufenthaltswahrscheinlichkeiten ermittelbar.

Für den Fall, daß der Ort, an dem sich das Telekommunikationsendgerät B befindet, z.B. dem Arbeitsplatz des zweiten Teilnehmers TLN2 entspricht, ist die Wahrscheinlichkeit, daß er sich dort während des Tages befindet, sehr hoch.

Für den Fall, daß das Telekommunikationsendgerät C eine öffentliche Telefonzelle ist, ist die Wahrscheinlichkeit, daß sich der zweite Teilnehmer TLN2 zu jedem Zeitpunkt dort befindet, sehr gering.

Im dritten Fall könnte sich das Telekommunikationsendgerät beispielsweise im Kraftfahrzeug des zweiten Teilnehmers TLN2 befinden. Die Aufenthaltswahrscheinlichkeit an diesem Ort wäre dann beispielsweise vor Arbeitsbeginn und nach Feierabend am größten.

Ebenso wäre jeder weitere beliebige Ort eines Telekommunikationsendgerätes denkbar.

Die unterschiedlichen Aufenthaltswahrscheinlichkeiten an mehreren Orten oder aber der Ort des wahrscheinlichsten Aufenthaltes sind in der Chipkarte des ersten Teilnehmers TLN1 gespeichert.

Bei dem Versuch, eine Verbindung, z.B. eine Telefonverbindung, von dem ersten Teilnehmer TLN1 zu dem zweiten Teilnehmer TLN2 aufzubauen, wird zuerst der Ort der größten Aufenthaltswahrscheinlichkeit angewählt, d.h., es wird versucht, eine Verbindung aufzubauen.

Der Verbindungsaufbau wird von der Chipkarte, die in der Lage ist Protokolle, also auch Signalisierungsprotokolle zu bearbeiten, vorgenommen.

Die Chipkarte des ersten Teilnehmers TLN1 identifiziert dann die Chipkarte des zweiten Teilnehmers TLN2 am Ort des Engerätes B.

Falls der zweite Teilnehmer TLN2 seine Chipkarte an keinem Ort eines Telekommunikationsendgerätes eingesteckt hat, von dem eine Aufenthaltswahrscheinlichkeit verzeichnet ist, erfolgt der Verbindungsaufbau entsprechend der bekannten Methode über die Nachrichtenvermittlungseinrichtung NV.

Entsprechend der Programmierung der Chipkarte kann die Wahrscheinlichkeit des Aufenthalts auch von weiteren, endlich vielen Teilnehmern gespeichert sein.

Im folgenden Teil wird die Verwendung der Chipkarte anhand eines weiteren Beispiels erläutert.

Die Chipkarte besitzt Mittel zur Bearbeitung von Telekommunikationsprotokollen, also auch vonn Signalisierungsprotokollen. Die Bearbeitung der Signalisierungsprotokolle dient z.B. dem Verbindungsaufbau zu einer anderen, in einem Telekommunikationsendgerät eingesteckten Chipkarte. Nach einem erfolgten Verbindungsaufbau können Telekommunikationsdienste wie z.B. Datenübermittlung abgewickelt werden.

Ein spezielles Beispiel hierfür wäre z.B., daß ein Benutzer eine Chipkarte in einem Telefonapparat eingesteckt hat, aber ein Telefax zu empfangen wünscht. Mittels der Chipkarte ist der Benutzer in der Lage, eine Verbindung zu einem Telefaxapparat aufzubauen. Demnach kann, nach erfolgtem Verbindungsaufbau als Telekommunikationsdienst eine Datenübermittlung von dem Telefonapparat zu dem Telefaxapparat erfolgen.

Desweiteren wäre es möglich, daß für den Fall, daß momentan keine Telefaxapparat erreichbar ist, die Daten von der Chipkarte empfangen und gespeichert werden. Wenn dann aber ein Telefaxapparat verfügbar ist, können die gespeicherten Daten von der Chipkarte auf den Telefaxapparat übertragen werden und ausgedruckt werden.

Desweiteren können auf der Chipkarte Leistungsmerkmale und/oder Makrobefehle gespeichert werden. Ein Benutzer einer Chipkarte führt somit speziell von ihm gewünschte Leistungsmerkmale mit sich. Ebenso sind Makrobefehle abrufbar, d.h. eine Folge von Mikrobefehlen können duch Aufruf eines Makrobefehls zur Ausführung gebracht werden.

## Patentansprüche

1. Chipkarte mit mindestens einer Ausgabe/Eingabeschnittstelle, einem Prozessor und einem Speicher zur Verwendung in einem an ein Telekommunikationsnetz angeschlossenen Telekommunikationsendgerät, wobei auf der Chipkarte benutzerbezogene Daten speicherbar sind,
**dadurch gekennzeichnet,**
- daß die Chipkarte erste Mittel zum Empfang von Signalisierungs- und Nutzdaten aus dem Telekommunikationsnetz, zweite Mittel zur Bearbeitung von Telekommunikationsprotokollen und mindestens eines Signalisierungsprotokolles und dritte Mittel zur Verarbeitung der empfangenen Signalisierungs- und Nutzdaten aufweist,
- daß in dem Speicher empfangene und verarbeitete Signalisierungs- und Nutzdaten speicherbar sind,
- daß die Chipkarte durch Einstecken in das Telekommunikationsendgerät über die ersten Mittel direkt mit dem Telekommunikationsnetz verbindbar ist, und
- daß eine Signalisierung mittels des ersten Signalisierungsprotokolls von den zweiten Mitteln der Chipkarte vorgenommen wird, um einen direkten Datenaustausch zwischen dem Telekommunikationsnetz und der Chipkarte zu ermöglichen.

2. Chipkarte nach Anspruch 1 zur Verwendung mit mindestens einer weiteren Chipkarte und mit vierten Mitteln zur Prüfung, ob die mindestens eine Chipkarte in dem Telekommunikationsendgerät eingesteckt ist.

3. Verwendung der Chipkarte nach Anspruch 1 oder 2 zur Bearbeitung von GSM-Protokollen und/oder ISDN-Protokollen.

4. Verwendung der Chipkarte nach einem der Ansprüche 1 oder 2 zur Abwicklung von Telekommunikationsdiensten.

5. Verwendung der Chipkarte nach Anspruch 1 oder 2 zur Speicherung von Leistungsmerkmalen und/oder Makrobefehlen.

6. Verwendung der Chipkarte nach Anspruch 1 oder 2 zum Austausch von Signalisierungs- und Nutzdaten zwischen der Chipkarte und einem Telekommunikationsnetzwerk.

7. Verwendung der Chipkarte nach Anspruch 2 zum Austausch von Signalisierungs- und Nutzdaten zwischen mindestens zwei gleichen oder mindestens zwei unterschiedlichen Chipkarten in einem Telekommunikationsendgerät und/oder in unterschiedlichen Telekommunikationsendgeräten.

## Claims

1. A chip card comprising at least one output/input interface, a processor and a memory for use in a telecommunications terminal connected to a telecommunications network, wherein user-related data can be stored on the chip card, characterised in that
- the chip card comprises first means for receiving signalling- and useful data from the telecommunications network, second means for processing telecommunications protocols and at least one signalling-protocol, and third means for processing the received signalling- and useful data,
- received and processed signalling- and useful data can be stored in the memory,
- by insertion into the telecommunications terminal the chip card can be directly connected to the telecommunications network by the first means and
- signalling via the first signalling-protocol is effected by the second means of the chip card in order to facilitate a direct exchange of data between the telecommunications network and the chip card.

2. A chip card according to Claim 1 for use with at least one further chip card and comprising fourth means for checking whether the at least one chip card is inserted in the telecommunications terminal.

3. Use of the chip card according to Claim 1 or 2 for the processing of GSM protocols and/or ISDN protocols.

4. Use of the chip card according to one of Claims 1 or 2 for handling telecommunications services.

5. Use of the chip card according to Claim 1 or 2 for the storage of user facilities and/or macro-commands.

6. Use of the chip card according to Claim 1 or 2 for exchanging signalling- and useful data between the chip card and a telecommunications network.

7. Use of the chip card according to Claim 2 for exchanging signalling- and useful data between at least two identical chip cards or at least two different chip cards in one telecommunications terminal and/or in different telecommunications terminals.

## Revendications

1. Carte à puce avec au moins une interface d'entrée/ sortie, un processeur et une mémoire pour utilisation dans un terminal de télécommunications connecté à un réseau de télécommunications, des données concernant l'utilisateur pouvant être mémorisées sur la carte à puce,
caractérisée en ce que
- la carte à puce présente des premiers moyens pour recevoir des données de signalisation et des données utiles provenant du réseau de télécommunications, des deuxièmes moyens pour traiter des protocoles de télécommunications et au moins un protocole de signalisation, et des troisièmes moyens pour traiter les données de signalisation et les données utiles reçues,
- des données de signalisation et des données utiles reçues et traitées peuvent être mémorisées dans la mémoire,
- la carte à puce peut être reliée directement au réseau de télécommunications par insertion dans le terminal de télécommunications par l'intermédiaire des premiers moyens, et
- une signalisation au moyen du premier protocole de signalisation est effectuée par les deuxièmes moyens de la carte à puce pour permettre un échange de données direct entre le réseau de télécommunications et la carte à puce.

2. Carte à puce selon la revendication 1 pour utilisation avec au moins une autre carte à puce et avec des quatrième moyens pour vérifier si ladite au moins une carte à puce est insérée dans le terminal de télécommunications.

3. Utilisation de la carte à puce selon la revendication 1 ou 2 pour traiter des protocoles GSM et/ou des protocoles RNIS.

4. Utilisation de la carte à puce selon l'une quelconque des revendications 1 ou 2 pour assurer des services de télécommunications.

5. Utilisation de la carte à puce selon la revendication 1 ou 2 pour mémoriser des caractéristiques fonctionnelles et/ou des macro-instructions.

6. Utilisation de la carte à puce selon la revendication 1 ou 2 pour échanger des données de signalisation et des données utiles entre la carte à puce et un réseau de télécommunications.

7. Utilisation de la carte à puce selon la revendication 2 pour échanger des données de signalisation et des données utiles entre au moins deux cartes à puce identiques ou au moins deux cartes à puce différentes dans un terminal de télécommunications et/ou dans différents terminaux de télécommunications.
